# EUROPEAN PATENT APPLICATION

(11) **EP 0 949 167 A2**
(43) Date of publication of application: **13.10.1999**
(21) Application number: 99610005.3
(22) Date of filing: 15.01.1999
(51) Int. Cl.: B65G 47/84

(54) **System for delivering packaging items to a packing line**

(30) Priority: 16.01.1998 DK 5398
(71) Applicant: Schur Packaging Systems A/S, 8700 Horsens (DK)
(72) Inventor: Sorensen, Bjarne Helbo, 8310 Tranbjerg J (DK); Lambach, Heinrich Wilhelm, 8700 Horsens (DK)
(74) Representative: Skoett-Jensen, Knud

(57) **Abstract**

For the feeding of packaging items in the form of erected cartons to a packing line,use is made of an angle transition with means which fully ensure that items which arrive more or less regularly are delivered and forwarded from the angle transition with a very high degree of positional accuracy on the packing line. At the delivery end, use is made of a decidedly friction-providing conveyor belt (2) which successively supplies items to the angle transition itself, which consists of smooth, rotating rollers (8) which by their rotation complete the delivery of the individual items, after which the delivery conveyor (2) is reversed to avoid the delivered item being touched by the next item. The feeding of the items along the smooth rollers to the further-forwarding catch-plate belt (30,34) is effected by means of lower catch-plates (18) which extend upwards between the rollers (8), and which are fed further out over the ends of the rollers for secure transfer of the items to a system of conveyor belts with their own catch-plates (32,36) for further transport of the items.

## Description

The present invention concerns the delivery of packaging items to a packing line in which the successively arriving items are packed in a desired manner, which can either be socalled flowpacking, i.e. wrapping in a tubular material, or insertion in box-type packaging items which are conveyed in parallel, e.g. by being pushed sideways therein.

The packing line will typically operate with a particular permanent frequency, while at the delivery area there can arise item delivery of a more irregular character, even though the delivery capacity should naturally be adjusted to the capacity of the packing line.

In order to achieve a uniform stepping forward in the packing line, with the invention use is made of a known basic principle, i.e. that the delivery of the item is effected via a conveyor which extends transversely in towards the packing line, so that the conveyed items may well be delivered in a slightly irregular manner, but at the delivery to the packing line they can nevertheless be gripped or merely pushed forward by means which work in precise step with the feeding required in the packing line. However, at the angle transition associated herewith, problems can arise with regard to the delivery precision and security, and it is these circumstances which are desired to be improved by means of the invention.

Normally, the delivery conveyor extends all the way forward to the intersection with the packing line, so that the items are brought to a position which is flush with the packing line, from which they are then pushed sideways off the belt by means of a plunger or an overlying catch-plate conveyor for further transport in the packing line. Under unfortunate circumstances, this can result in transport disturbances, among other things because the belt must be in a distinct friction engagement with the items. With the invention, an alternative solution has been chosen, i.e. a combination of a pronounced friction-providing delivery belt and a short, active roller conveyor with completely or almost completely smooth rollers which are disposed in the packing li-ne's feeding area and extend in the longitudinal direction of this line. The transport belt can with good security hereby deliver the items to the driven rollers, which can convey the items further to a position against a permanent stop-face, so that the transferred item has now completely left the conveyor belt and is ready to be transported further in the packing line, i.e. at the beginning with a short sliding forwards along with the rollers. It is hereby even possible to utilize a preferred possibility, i.e. to feed the items by using catch-plates which extend upwards from below through the space between adjacent rollers.

In the feeding of a transferred item along with the rollers, it should be ensured that the item is free and thus can not get clamped in between the stop-face and the next item which is required to be delivered from the feeding conveyor. This is of particular importance, in that as mentioned use is made of a conveyor belt with relatively high friction against the items, whereby in cases where the items are fed directly after one another, such a clamping can easily arise. It is possible to stop the conveyor belt as a function of the detection of the arrival of an item at the stop-face or even just before it arrives at said stop-face, but with the invention it is preferred that this is taken a step further, i.e. that the conveyor belt is not only brought to a standstill but also made to reverse a short distance, whereby the next following item is removed from the actual operation area in a more secure manner.

The catch-plates mentioned above can push the items out over the free ends of the rollers to a conveyor belt for further transport, this belt being provided with fixed catch-plates which can take over the feeding function. With the use of upwardly-extending catch-plates for pushing the items off the rollers, it is hereby a condition that these catch-plates are fed forward to a position slightly in front of the rear end of the reforwarding belt, namely in order for the belt and its catch-plates to have room behind this position to be swung upwards around a reversing roller. When it is desirable at the same time to feed the push-off catch-plates respectively on circulating belts or chains, there arises the situation that these should be fed to a distance in front of said position to enable these catch-plates to be swung down from their delivery position around corresponding reversing wheels, whereby these must consequently overlap the conveyor belt's reversing roller in the longitudinal direction.

On this basis, according to the invention it has been found best to divide the reforwarding conveyor belt into three belts which are can easily be separated laterally, and which have slots between them through which the push-off catch-plates can swing down in the transition area. It has hereby been found advantageous for the conveyor belt to be divided into sections with a rearwardly-extending centre part which opposite its side edges corresponds with reforwarding catch-plates on this middle belt, so that these can influence a central rear-edge area of the items being fed. The slots between the conveyor sections can thus be kept quite narrow, since the first catch-plates shall thus not pass down through these slots but merely through an empty space opposite the side edges of the middle belt. At that place where the rearwardly-extending middle belt reaches forward to the beginning of the outer side belts, the catch-plates on these will be synchronously arranged to lie on a line with the respective catch-plates on the middle belt, so that each set of three catch-plates will actually form a single, transversely-lying catch-plate element, merely with narrow slots appearing herein. These broad catch-plate elements are desirable for the establishing of a secure support for the conveyed items, so that these appear with correct orientation upon delivery to the actual packaging station.

It is a special characteristic of an expedient embodiment that in the said narrow slots between the conveyor sections,and along a suitable length of these, a pair of fixed slide rails can be provided which extend at a level slightly raised over the top of the conveyor belt itself. There will hereby arise a quite light sliding friction on both sides of the middle of the item, whereby it will be ensured that an item which may appear with a certain crookedness in front of the associated broad catch-plate element will be pressed relatively backwards against this and herewith be brought into a correctly aligned position on the belt. In plants where the items must be pushed sideways from the belt for placing in parallel-conveyed cartons, these slide rails should not extend all the way forward to the relevant transfer point or area, where the items should be able to slide easily on and in the transverse direction of the belt.

Furthermore, it has been found advantageous that on at least one of the transport rollers in the centremost area of the roller track, a thread or worm is formed which protrudes slightly from the roller surface at the delivery end of the roller, said thread or worm executing a rearwards transport movement upon the normal, operative direction of rotation of the roller. The worm, which does not need to be particularly friction-providing, will not in any way hinder the ordinary pushing forward of the items along with the rollers, but in the event of irregularities where, e.g. due to vibrations it can happen that an item fed to the angle transition can turn out on the smooth rollers and herewith assume an incorrect position for the subsequent pushing forwards, it will bring about a feeding-back of the item against the guide-in wall along which the item is originally conveyed, so that the correct orientation of the item will be maintained, in that in practice the item is prevented from swinging out. This is also of significance from the control point of view, which is explained more fully in the following.

The invention will now be described in more detail with reference to the drawing, where
fig. 1 is a schematic perspective view of an angle transition according to the invention, and
fig. 2 is a side view of the receiving and delivery part thereof.

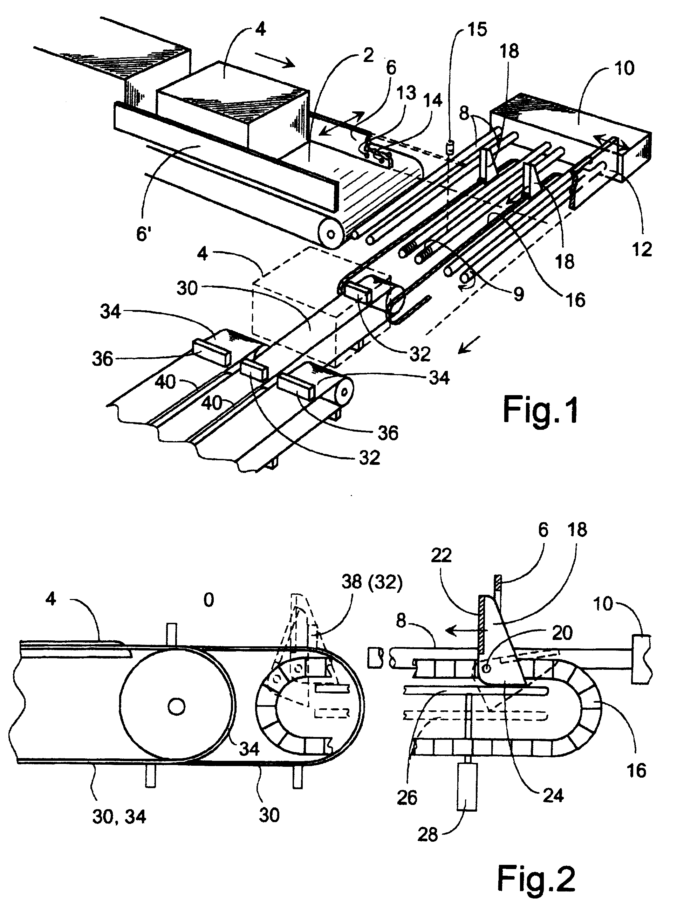

In fig. 1 there is shown a conveyor belt 2 on which items 4 are delivered for subsequent packaging in a packing station, which in a manner not shown is associated with the receiving/delivery end of the shown angle transition. The items 4, which possibly with a certain degree of irregularity are conveyed between guide walls 6 and 6', are delivered from the belt 2 to a short active roller track with smooth, rotating rollers 8, which as shown in the drawing extend at their rearmost ends from a gear housing 10 which contains the means necessary for maintaining the rotation of the rollers 8 which, as shown, can be quite thin. Via the rotation of these rollers, a delivered item 4 is fed securely forward until it abuts against a stop-plate 12 at the right-hand end of the track formed by the rollers 8.

The guide wall 6 extends in over the rollers 8, but here it is formed with downwardly-open slots for the passage of catch-plates 18 (described later) on a transversely-moving conveyor. In a manner not shown, the stop-plate 12 is adjustable sideways so that it forms a stop for the arriving items 4, whereby these items will be stopped in a position in which they lie more or less symmetrically around the middle of the roller track 8.

At the delivery end of the belt 2, a pair of sensors 13 and 14 are provided at a short distance from each other, while directly behind the plane of the wall 6' there is permanently disposed a further sensor 15 which registers the presence of an item 4 on the roller track 8. When such a registration occurs, the sensor 13 is made operative for the stopping of the belt 2 upon the arrival at the front end of the next succeeding item, after which the belt is started again when the sensor 15 registers the removal of the first item from the roller track 8. The stopping of the belt is not effected in a totally abrupt manner, and with items of large extent in the belt's feeding direction there can be a risk that the next succeeding item reaches forward and clamps against the item on the roller track. However, providing that it registers "dark" after the stopping of the belt, the sensor 14 will bring about a reversal of the belt 2 until it again sees "light", whereby the next succeeding item is quickly brought back to a safe distance from the item on the roller track. The belt 2 is configured as a decidedly friction-providing belt, so that heavy items will also be drawn back immediately upon reversal of the belt.

The rollers 8 are divided into groups, so that there is room between some of them to enable upwardly-protruding catch-plates 18, which extend from underlying conveyor chains 16, to push an item 4 along the rollers 8 out past the outer, free ends of said rollers, following which the transport after this angle transition is taken over by the belt means described below.

As indicated in fig. 2, the catch-plates 18 consist of triangular plate elements which, near a right-angled corner foremost in the direction of movement, are cross-hinged to the chain 16 by means of a pivot pin 20, so that from there they have an upright front surface 22 and from here a rearwardly-extending foot part 24. With this configuration, the centre of gravity of the catch-plates 18 will lie behind the pivot pin 20, whereby in the free condition the catch-plates will assume the position shown with stippled lines in fig. 2, i.e. swivelled down and thus not in the upwardly-extending position.

However, a plate rail 26 for the catch-plates 18 is arranged under the upper feeding track, in that said plate rail 26 can be raised from a passive position shown with stippled lines to an upper, active position in which in cooperation with the catch-plate's foot part 24 it will force the catch-plate to assume its upright position, e.g. by the rail 26 being raised to its relevant operative position by means of one or more cylinders 28, depending on whether the sensor 15 registers a completed delivery of an item 4 to the roller track 8. If this delivery has not been accomplished, i.e. clearly separated from the next succeeding item 4, the further transfer in the angle transition will thus be stopped until it is again ensured that the items 4 can be conveyed entirely separate from each other. A control unit will ensure that the feed rail 26 remains in its bottom position if the sensor 15 registers "air".

Upon the feeding forward of the catch-plates 18, the transferred item 4 will be pushed out along the rollers 8 and forward to a conveyor for further transport, this conveyor in the preferred embodiment being divided into three belts, i.e. a middle belt section 30 with catch-plates 32, and two shorter side belt sections 34 with catch-plates 36. In a manner not shown, these belts are built up as chain-plate conveyors with smooth chain-plate parts, and they are moved synchronously in such a manner that the respective catch-plates 32 and 36 will lie in a line seen in the transverse direction. The conveyed item is pushed in on the protruding part of the middle belt 30, and the movements are coordinated so that a catch-plate 32 is made to swing up immediately after the item has been pushed in, and with the position indicated by the reference figure 38 in fig. 2, the catch-plate 38 takes over the further feeding forward of the item together with the belt 30 in general. Immediately afterwards, the catch-plates 18 move out over the end of the guide rail 26, whereby they tip backwards and down into the said passive position. The delivery of the next item to the roller track 8 takes place while one or more sets of catch-plates 18 execute their return movement in the passive position. The guide rail 26 remains in its raised position for as long as the sensor equipment registers a regular delivery of items, but with any pauses which arise, the rail will be lowered so that there is no risk that a delayed item will be pushed forward before it is in place on the roller track.

If an item 4 is delivered slightly crooked in relation to the catch-plate 32, and hereby with its one side lying slightly behind the front plane of the catch-plate, a certain straightening-up will take place in that phase where the associated outer catch-plate 36 swings up in alignment with the catch-plate 32.

A second possibility is that an item which is pushed by the catch-plate 18 over on the middle belt 30 comes to lie slightly in front of the catch-plate 32, and thus also in front of the catch-plate set 32,36. It will normally be an absolute demand that the items shall lie up against the catch-plates 32,36 in the subsequent packing station, which in a known manner can be achieved by letting the items pass through a brush arrangement. With the invention, however, an alternative solution has been preferred which better accommodates the handling of both high and low items, i.e. the use of a pair of slide rails 40 which extend in the slots between the three belts 30, 34 and slightly above the surfaces of these belts. An item lying loosely or askew will hereby automatically be brought into an aligned, positive contact against the catch-plate 32,36, in that it is this alone which has a feeding influence on the item. With apparatus of the cartonizing type, where the items are pushed sideways from the belt, the slide rails should not extend all the way forward to the push-off area, so that the items can eaily be pushed off the smooth belt. Moreover, it will also be possible that the catch-plates 18 are controlled for tipping down even before they have left the rail 26, i.e. by the lowering of this rail.

It is important that the items in the individual series of different item sizes assume well-defined start positions on the roller track 8, partly with a transverse positioning on the centre of the track, which can be ensured by side adjustment of the stop-plate 12, and partly by being stabilized in their abutment against the wall 6 from which the catch-plates 18 are fed through suitable slots in the wall. With the invention it has been chosen to let the foremost wall 6' be fixed and the rearmost wall 6 be adjustable sideways for adaptation to the items, which means that the front-edge areas of the items on the roller track 8 will always begin by lying opposite the wall 6', and that the rollers 8 reach forward to a distance in front of this area. Along their outer end parts, the rollers 8 or some of these rollers are provided with a thread or worm 9 which with roller rotation will spiral rearwards, i.e. which will constantly exercise a slight rearwardly-feeding influence on the items regardless of their length, precisely in order to hold the items against the wall 6 until they are pushed forward by the catch-plates 18.

This arrangement must be seen especially in the light of the use of the continuously rotating rollers 8, which after an item has passed forward to the stop-plate 12 will support items solely with purely dynamic friction which, after all, is quite slight. Therefore, only very weak influences are needed in order for the item to "float' on the rollers, typically by swinging out around the firmer contact against the plate 12, but correspondingly a slight reverse-feeding force from the worms will be sufficient to stabilise the items until the catch-plates 18 come forward. Consequently, this makes it possible for use to be made of the continuously-driven rollers, so that these do not need to be continually started and stopped.

## Claims

1. System for the delivery to a packing line of packaging items (4) which are supplied in a more or less even flow, with the object of the further transport of these items in a completely even flow along the packing line, said system comprising an angle transition to which the uneven flow of items is fed sideways on a delivery conveyor (2), in that the same angle transition cooperates with catch-plates (18) on longi-tudinal transport means which further convey the items at well-controlled mutual distances to corresponding catch-plates (32,36) which feed the items to packing units with a high degree of positional accuracy, **characterized** in that the delivery conveyor for the packaging items is a distinctly friction-providing conveyor belt (2) which is connected with reversible driving means, and in that sensing elements (14) are placed in the angle transition's receiving area for the detection of a fully accomplished arrival of each new item (4), and depending on this to effect a brief reversal of the delivering conveyor belt (2), preferably depending on whether a further sensing element (13) detects the proximity of a succeeding item to the arrived item, said arrival sensing elements being operatively connected with means for the activation of said catch-plates (18), so that these are made operative only in the event of correctly-arriving items, and in that the angle transition's longitudinal transport means comprises a system (16) for the movement of said catch-plates (18) in connection with a system of smooth, driven supporting rollers (8) which extend in the longitudinal direction, and which are connected with driving means for the rotation of these rollers in the transverse feeding-in direction for the further forwarding of the items arriving from the delivery belt to the detected arrival position on the angle transition.

2. System according to claim 1, **characterized** in that the catch-plates (18) extend upwardly between said rollers from an underlying chain drive (16), in connection with which means (26,28) are arranged for the raising of said catch-plates (18) depending on said sensing element (14) having detected a fully-accomplished arrival of an item (4) at the angle transition.

3. System according to claim 1, **characterized** in that at least some of the smooth, rotating rollers (8) are configured with a rearwards-feeding worm (9) along their outward end parts.

4. System according to claim 1, **characterized** in that the longitudinal transport means (16) continue in a belt conveyor (30,34) which is divided into three parallel, catch-plate-supporting and synchronously-driven belts, between which fixed, upstanding slide ribs (40) are provided along at least a part section to ensure a regular or item-aligned contact between a conveyed item and the forward-feeding catch-plates (32,36) on the driven belt.

5. System according to claim 4, **characterized** in that the centremost belt (30) is arranged for direct receipt of items pushed-off from the smooth rollers (8) by the rollers' associated catch-plates (18), which are swung down at the sides of said centremost belt, while the outer belts (34) begin further forward in order to provide room for the operative swinging-down of said catch-plates (18).
